# EUROPÄISCHE PATENTSCHRIFT

(11) **EP 0 902 900 B1**
(45) Veröffentlichungstag und Bekanntmachung des Hinweises auf die Patenterteilung: **08.01.2003**
(21) Anmeldenummer: 98919051.7
(22) Anmeldetag: 06.03.1998
(51) Int. Cl.: G01S 15/89, G01S 7/52, G01N 29/10

(54) **VORRICHTUNG ZUM UNTERSUCHEN VON GRENZFLÄCHENBEREICHEN MIT ULTRASCHALL**
DEVICE FOR EXAMINING BOUNDARY SURFACE AREAS WITH ULTRASOUND
DISPOSITIF D'EXAMEN PAR ULTRASONS DE SURFACES LIMITES

(30) Priorität: 21.03.1997 DE 19711863
(43) Veröffentlichungstag der Anmeldung: 24.03.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: HIRSEKORN, Sigrun, D-66125 Dudweiler (DE); FASSBENDER, Silvia, D-66123 Saarbrücken (DE)
(74) Vertreter: RACKETTE Partnerschaft Patentanwälte
(86) Internationale Anmeldenummer: DE9800673
(87) Internationale Veröffentlichungsnummer: WO98043110

(56) Entgegenhaltungen:
- EP-A- 0 116 901
- DE-C- 4 324 143
- US-A- 5 351 543

## Beschreibung

Die Erfindung betrifft eine Vorrichtung zum Untersuchen von Grenzflächenbereichen mit Ultraschall mit wenigstens einer Sendeeinheit, mit der Sendesignale einstellbarer Amplitude bei wenigstens einer Grundfrequenz erzeugbar sind, mit einer Empfangseinheit, mit der die wenigstens eine Grundfrequenz sowie wenigstens die zugehörige niedrigste der höheren Harmonischen der wenigstens einen Grundfrequenz der Sendesignale in ihren Frequenzamplituden als Empfangssignale detektierbar sind, und mit einer Auswerteeinheit, in der die Frequenzamplituden der Empfangssignale zu einem Meßwert verknüpfbar sind.

Eine derartige Vorrichtung ist aus der DE 43 24 143 C1 bekannt. Bei dieser Vorrichtung ist eine Sendeeinheit vorgesehen, mit der bei einer Grundfrequenz Sendesignale einstellbarer Amplitude erzeugbar sind. Mit einer Empfangseinheit sind Frequenzkomponenten bei der Grundfrequenz sowie höheren Harmonischen der Grundfrequenz detektierbar. Eine Charakterisierung von Grenzflächenbereichen hinsichtlich der Bindekraftverhältnisse in einem untersuchten Grenzflächenbereich ist dadurch geschaffen, daß die Frequenzamplitude der Grundfrequenz sowie wenigstens eine weitere Frequenzamplitude bei einem weiteren harmonisch mit der Grundfrequenz in Beziehung stehenden Frequenzanteil mittels einer Auswerteeinheit aufsummiert werden. Um physikalisch korrekte relative Meßwerte zum Charakterisieren des Bindekraftpotentials zu erzielen, sind dabei die Frequenzkomponenten bei Harmonischen mit gerader Ordnungszahl negativ und die Harmonischen mit ungerader Ordnungszahl positiv zu wichten. Weiterhin ist es notwendig, zum auch absolut richtigen Charakterisieren des Bindekraftpotentiales einen Gleichspannungsanteil zu erfassen.

Mit der gattungsgemäßen Vorrichtung sind zwar die Bindekraftverhältnisse charakterisierbar, allerdings weist sie den Nachteil auf, daß beispielsweise der Gleichspannungsanteil meßtechnisch schwierig zu erfassen ist. Zudem sind quantitative Aussagen hinsichtlich der ebenfalls wichtigen Haftfestigkeit, das heißt der Differenz zur maximalen Bindekraft, nicht möglich.

Der Erfindung liegt die Aufgabe zugrunde, eine Vorrichtung der eingangs genannten Art so weiterzubilden, mit der bei meßtechnisch geringem Aufwand eine präzise zerstörungsfreie Bestimmung der Haftfestigkeit geschaffen ist.

Diese Aufgabe wird erfindungsgemäß dadurch gelöst, daß der Meßwert die einfache Frequenzamplitude einer Grundfrequenz und wenigstens den doppelten negativen Wert der Frequenzamplitude der dieser Grundfrequenz zugeordneten niedrigsten der höheren Harmonischen aufweist.

Dadurch, daß der Meßwert aus der einfachen Frequenzamplitude der wenigstens einen Grundfrequenz sowie wenigstens dem doppelten negativen Wert der Frequenzamplitude der zugehörigen niedrigsten der höheren Harmonischen, das heißt der zweiten Harmonischen bei der doppelten Grundfrequenz, gebildet ist, lassen sich quantitative Aussagen zu der Haftfestigkeit treffen, die meßtechnisch verhältnismäßig einfach sowie zerstörungsfrei erreichbar sind. Einer Erfassung eines Gleichspannungsanteiles für auch quantitativ korrekte Haftfestigkeitsmeßwerte ist nicht erforderlich.

In zweckmäßigen Weiterbildungen sind neben der zweiten Harmonischen auch weitere höhere Harmonische erfaßt. Dadurch wird eine Steigerung der Meßgenauigkeit erzielt. Dabei werden die Frequenzamplituden der dritten und fünften Harmonischen mit dreifacher beziehungsweise fünffacher Grundfrequenz mit ihren einfach positiven Werten und die der sechsten Harmonischen mit sechsfacher Grundfrequenz mit ihrem doppelten negativen Wert erfaßt. Die vierte Harmonische mit dem vierfachen Wert der Grundfrequenz ist dabei unberücksichtigt zu lassen. Entsprechend sind Frequenzkomponenten mit dem (2n+1)-fachen Wert der Grundfrequenz einfach und mit dem 2(2n +1)-fachen Wert doppelt negativ zu nehmen, wobei "n" einer ganzen Zahl größer oder gleich Null entspricht. Frequenzkomponenten mit dem 4n-fachen Wert sind unberücksichtigt zu lassen.

Weiterhin ist es zweckmäßig, Sendesignale mit wenigstens zwei oder mehreren Grundfrequenzen vorzusehen. Dadurch sind durch nichtlineare Prozesse nicht nur Frequenzkomponenten bei den Grundfrequenzen sowie deren zugeordneten höheren Harmonischen, sondern auch Summenfrequenzen und Differenzfrequenzen aus den verschiedenen Grundfrequenzen, höheren Harmonischen sowie Kombinationen daraus erzeugbar und zum Erhalt von präzisen Meßwerten miteinander additiv mit zum Teil einfach positiver und einem Teil doppelt negativer Gewichtung verknüpfbar.

Zum Bestimmen der Zughaftfestigkeit sind mit der Sendeeinheit in einem Prüfkörper Ultraschallwellen mit einer großen Verschiebekomponente rechtwinklig zur Oberfläche wie zum Beispiel rechtwinklig auf einen zu untersuchenden Grenzflächenbereich einfallende Longitudinalwellen und zum Bestimmen der Scherhaftfestigkeit Ultraschallwellen mit einer großen Verschiebekomponente parallel zur Oberfläche wie zum Beispiel rechtwinklig auf einen zu untersuchenden Grenzflächenbereich einfallende Transversalwellen einschallbar.

Weitere zweckmäßige Ausgestaltungen und Vorteile der Erfindung sind Gegenstand der Unteransprüche sowie der nachfolgenden Beschreibung von Ausführungsbeispielen unter Bezug auf die Figuren der Zeichnung. Es zeigen:
- Fig. 1: in einem Blockschaltbild ein Ausführungsbeispiel einer Vorrichtung zum Untersuchen von Grenzflächenbereichen mit Ultraschall mit einer Sendeeinheit und einer Empfangseinheit, die über jeweils einen Sendekopf beziehungsweise einen Empfangskopf verfügen, und
- Fig. 2: ein weiteres Ausführungsbeispiel einer Vorrichtung zur Untersuchung von Grenzflächenbereichen mit Ultraschall mit einer Sendeeinheit und einer Empfangseinheit, die über jeweils mehrere Sendeköpfe und Empfangsköpfe verfügen.

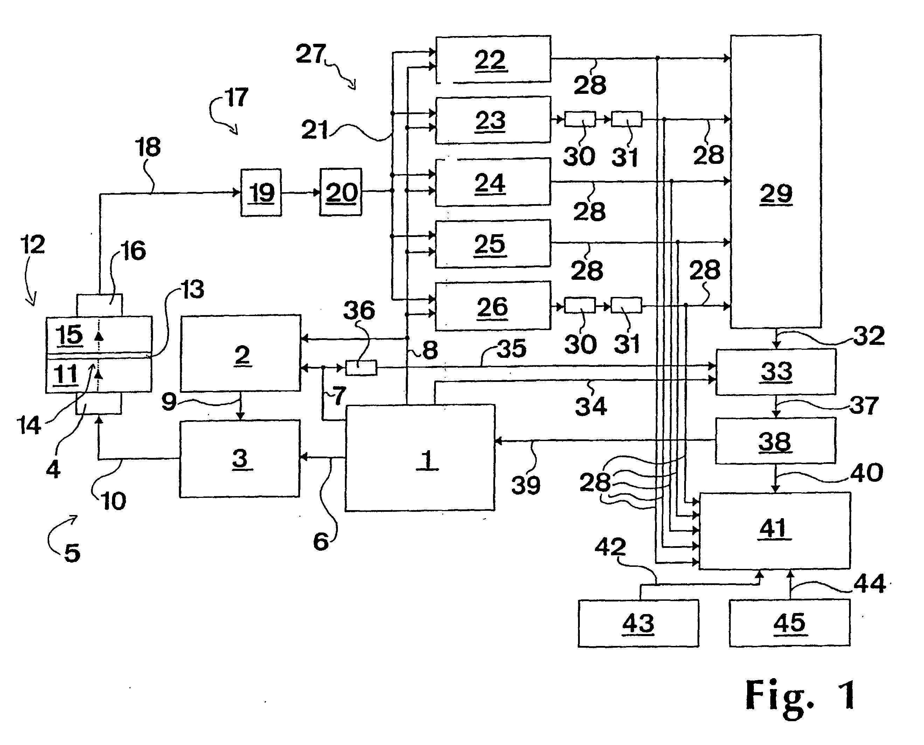

Fig. 1 zeigt in einem Blockschaltbild ein Ausführungsbeispiel einer Vorrichtung zum Untersuchen von Grenzflächenbereichen mit Ultraschall, die eine zentrale Steuereinheit 1 aufweist. An die Steuereinheit 1 sind ein Ansteuermodul 2 und Schaltmodul 3 mit einem nachgeschalteten Sendekopf 4 angeschlossen, die eine Monofrequenzsendeeinheit 5 bilden. Mit der Steuereinheit 1 ist die Wiederholfrequenz, die Zeitdauer, die in diesem Ausführungsbeispiel einzige Grundfrequenz und innerhalb eines Meßzyklus schrittweise beginnend von einem verhältnismäßig niedrigen Startwert die Amplitude eines von dem Sendekopf 4 emittierbaren Sendesignales einstellbar.

Die Werte für die Wiederholfrequenz und die Zeitdauer sind über eine Pulsleitung 6 auf das Schaltmodul 3 übertragbar. Die Werte für die Amplitude und die Grundfrequenz des Sendesignales sind über eine Amplitudenleitung 7 und eine Frequenzleitung 8 auf das Ansteuermodul 2 übertragbar. Mit dem Ansteuermodul 2 ist ein kontinuierlicher Wellenzug bei der vorgesehenen Grundfrequenz und mit verschiedenen einstellbaren Amplituden erzeugbar, der über eine Ansteuerleitung 9 auf das Schaltmodul 3 weiterleitbar ist. Mit dem Schaltmodul 3 sind bei der eingestellten Wiederholfrequenz und Zeitdauer gepulste Ansteuersendesignale über eine Sendeleitung 10 auf den Sendekopf 4 übertragbar.

Bei dem in Fig. 1 dargestellten Ausführungsbeispiel ist ein Sendekopf 4 vorgesehen, mit dem zur Bestimmung der Zughaftfestigkeit Longitudinalwellen oder in einer Abwandlung zum Bestimmen der Scherhaftfestigkeit Transversalwellen jeweils in rechtwinkliger Einschallung erzeugbar sind. Wie in Fig. 1 dargestellt, ist der Sendekopf 4 so an ein erstes Klebstück 11 eines Prüfkörpers 12 angekoppelt, daß ein beispielsweise durch einen Haftvermittler 13 ausgebildeter Grenzflächenbereich 14 zwischen dem ersten Klebstück 11 und einem zweiten Klebstück 15 des Prüfkörpers 12 rechtwinklig mit longitudinalen Ultraschallwellen durchschallbar ist. Die Wiederholfrequenz und Zeitdauer des Sendesignales sind dabei so auf die Dicken der Klebstücke 11, 15 angepaßt, daß Reflexionssignale und Sendesignale zeitlich trennbar sind.

Dem Sendekopf 4 gegenüberliegend ist gemäß Fig. 1 an dem zweiten Klebstück 15 ein Empfangskopf 16 einer Empfangseinheit 17 angekoppelt. Der Empfangskopf 16 weist eine Bandbreite auf, mit der als Empfangssignale die von dem Sendekopf 4 abgegebene Grundfrequenz sowie wenigstens Frequenzanteile der zugehörigen zweiten Harmonischen als niedrigster der höheren Harmonischen bei der doppelten Grundfrequenz detektierbar sind, die durch nichtlineare Wechselwirkungen im Grenzflächenbereich 14 erzeugt ist.

Zweckmäßigerweise weist zum Erhöhen der Meßgenauigkeit der Empfangskopf 16 einen Frequenzgang auf, mit dem zusätzlich die dritte, fünfte und sechste Harmonische mit jeweils dreifacher, fünffacher beziehungsweise sechsfacher Grundfrequenz als Empfangssignal detektierbar sind.

Das Ausgangssignal des Empfangskopfes 16 ist über eine Empfangsleitung 18 einem Frequenzanalysator 19 der Empfangseinheit 17 einspeisbar. Mit dem Frequenzanalysator 19 ist das Fourierspektrum des von dem Empfangskopf 16 aufgenommenen Empfangssignales generierbar. Das Ausgangssignal des Frequenzanalysators 19 ist einem Korrekturglied 20 der Empfangseinheit 17 einspeisbar, mit der die aufgrund des Frequenzganges des Empfangskopfes 16 verzerrten Frequenzamplituden der Frequenzanteile der dem Frequenzanalysator 19 eingespeisten Empfangssignale auf eine frequenzunabhängige Empfindlichkeit korrigierbar sind.

Bei einer Abwandlung weist der Empfangskopf 16 einen Frequenzgang auf, der die Frequenzamplituden entsprechend der weiter unten beschriebenen Bildung des Meßwertes implizit wichtet. Bei dieser Abwandlung ist das in Fig. 1 dargestellte Korrekturglied 20 nicht zwingend erforderlich.

Das Ausgangssignal des Korrekturgliedes 20, beziehungsweise bei der Abwandlung mit fehlendem Korrekturglied 20 das Ausgangssignal des Frequenzanalysators 19, ist über Frequenzkomponentenleitungen 21 einem Grundfrequenzfilter 22, einem ersten Obertonfilter 23, einem zweiten Obertonfilter 24, einem dritten Obertonfilter 25 sowie einem vierten Obertonfilter 26 einer Auswerteeinheit 27 einspeisbar. Das Grundfrequenzfilter 22 sowie die Obertonfilter 23, 24, 25, 26 sind als über die Frequenzleitung 8 mit der Steuereinheit 1 in ihrer Transmissionsfrequenz einstellbare Bandpaßfilter ausgeführt.

Das Grundfrequenzfilter 22 ist auf die in diesem Ausführungsbeispiel einzige Grundfrequenz des Sendesignales abgestimmt. Die Transmissionsfrequenz des ersten Obertonfilters 23 ist auf einen der doppelten Grundfrequenz der zugehörigen zweiten Harmonischen entsprechenden Frequenzwert abgestimmt. Die Transmissionsfrequenz des zweiten Obertonfilters 24 ist auf einen der dreifachen Grundfrequenz der dritten Harmonischen entsprechenden Frequenzwert abgestimmt. Die Transmissionsfrequenz des dritten Obertonfilters 25 ist auf einen der fünffachen Grundfrequenz der zugehörigen fünften Harmonischen entsprechenden Frequenzwert angepaßt. Der Durchlaß des vierten Obertonfilters 26 ist so eingerichtet, daß der Frequenzanteil der sechsten Harmonischen mit sechsfacher Grundfrequenz herausfilterbar ist. Gleichspannungsanteile in den Empfangssignalen sind damit eliminiert.

Die den Frequenzamplituden bei den entsprechenden Transmissionsfrequenzen entsprechenden Ausgangssignale des Grundfrequenzfilters 22 sowie des zweiten Obertonfilters 24 und dritten Obertonfilters 25 sind über Monofrequenzleitungen 28 einem Summierglied 29 der Auswerteeinheit 27 einspeisbar. Mit dem Summierglied 29 sind die eingespeisten Frequenzamplituden zu einem Meßwert aufaddierbar. Die Ausgangssignale des ersten Obertonfilters 23 sowie des vierten Obertonfilters 26 sind dem Summierglied 29 über jeweils ein vorgeschaltetes Invertierelement 30 mit nachgeordnetem Verdoppelelement 31 als Signalwandler über Monofrequenzleitungen 28 einspeisbar. Mit jeweils einem Invertierelement 30 und nachgeschaltetem Verdoppelelement 31 ist die Frequenzamplitude des jeweils vorgeschalteten Obertonfilters 23, 26 mit einem negativen Vorzeichen versehen und verdoppelt.

Der aus der Summe der einfach positiv beziehungsweise doppelt negativ gewichteten Frequenzamplituden gebildete Meßwert ist über eine Summensignalleitung 32 einem Meßwerteingang eines Meßwertespeichers 33 einspeisbar. Weiterhin sind dem Meßwertespeicher 33 über eine Taktleitung 34 ein sich periodisch mit der Wiederholungsrate des Sendesignales wiederholendes Taktsignal aus der Steuereinheit 1 einspeisbar. Schließlich ist dem Meßwertespeicher 33 über eine Amplitudenleitung 35 ein in einen an die Amplitudenleitung 7 angeschlossenen Amplitudenwandler 36 generierbarer Amplitudenwert einspeisbar, der vorzugsweise proportional zu der Amplitude des Sendesignales ist. In dem Meßwertespeicher 33 sind mit der Repetitionsfrequenz des Taktsignales die Meßwerte in bezug auf die Amplitude des Sendesignales kalibrierbar, die über eine Ausgangsleitung 37 einem zweistufigen Meßwertkomparator 38 einspeisbar sind.

In dem zweistufigen Meßwertkomparator 38 sind zwei aufeinanderfolgende kalibrierte Meßwerte abspeicherbar und beispielsweise durch Subtraktion oder Division miteinander vergleichbar. Ist der aktuelle kalibrierte Meßwert größer als der vorangegangene kalibrierte Meßwert, ist der Steuereinheit 1 über eine Schrittsteuerleitung 39 ein Schrittsignal zum Erhöhen der Amplitude des Sendesignales einspeisbar. Ist hingegen der aktuelle kalibrierte Meßwert kleiner als der vorangegangene kalibrierte Meßwert, ist der Steuereinheit 1 über die Schrittsteuerleitung 39 ein Stopsignal zum Beenden des Meßzyklus zuführbar.

Weiterhin ist jeder dem Meßwertkomparator 38 zugeführte kalibrierte Meßwert über eine Meßwertausgangsleitung 40 einem Rechenglied 41 der Auswerteeinheit 27 einspeisbar, dem weiterhin über die verschiedenen Monofrequenzleitungen 28 die einzelnen Frequenzamplituden getrennt einspeisbar sind. Das Rechenglied 41 ist über eine Kalibrierwerteleitung 42 an einen Kalibrierwertespeicher 43 und über eine Parameterleitung 44 an einen Parameterspeicher 45 angeschlossen.

Mit dem Rechenglied 41 sind aus den mit dem Summierglied 29 gebildeten kalibrierten Meßwerten, den Einzelwerten der Frequenzamplituden sowie kumulativ oder alternativ mit in den Kalibrierwertespeicher 43 abgelegten Kalibrierwerten und/oder in den Parameterspeicher abgelegten Parameterwerten die Bindekraftverhältnisse sowie die Haftfestigkeit im untersuchten Grenzflächenbereich 14 des Prüfkörpers 12 bestimmbar. Die an einer Kalibrierprobe aufgenommen, in dem Kalibrierwertespeicher 43 abgelegten Kalibrierwerte dienen hierzu als phänomenologische Referenz und die in dem Parameterspeicher 45 abgelegten Parameterwerte als Eingabedaten für ein auf der Grundlage der Elastizitätsgleichungen berechnetes Modell des Grenzflächenbereiches 14 des Prüfkörpers 12.

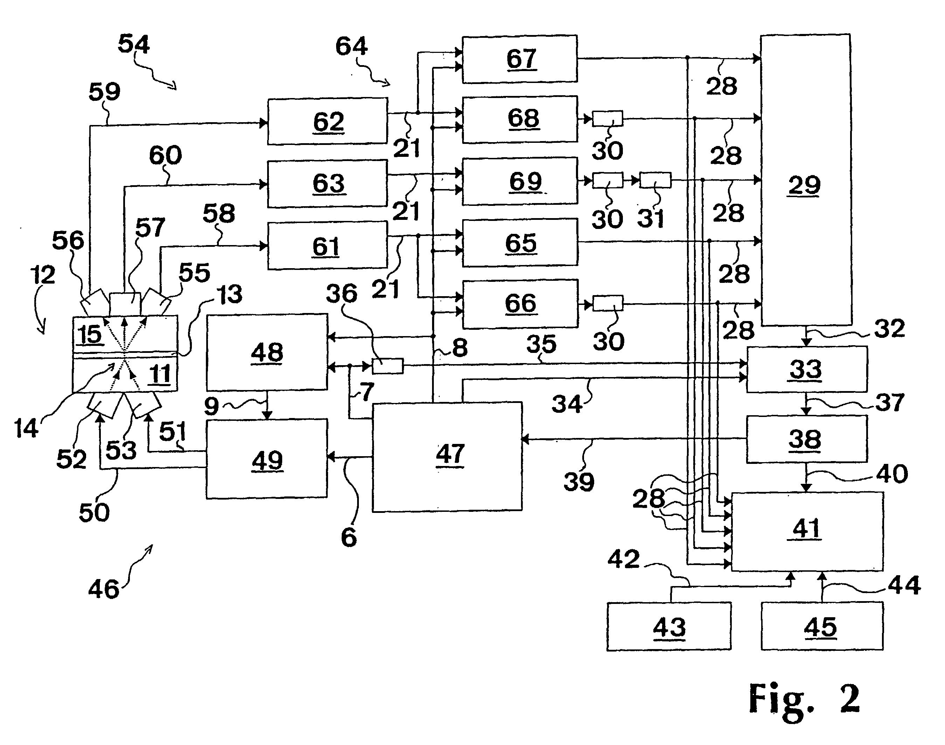

Fig. 2 zeigt in einem Blockschaltbild ein weiteres Beispiel einer Vorrichtung zum Untersuchen von Grenzflächenbereichen mit Ultraschall. Das in Fig. 2 dargestellte Ausführungsbeispiel weist eine Reihe von Bauelementen auf, die bereits bei dem anhand Fig. 1 erläuterten Ausführungsbeispiel ausführlich beschrieben sind. Diese Bauelemente sind mit den gleichen Bezugszeichen wie bei dem anhand Fig. 1 erläuterten Ausführungsbeispiel versehen und im weiteren nicht näher erläutert.

Die Vorrichtung gemäß Fig. 2 weist eine Multifrequenzsendeeinheit 46 auf, bei der über eine Steuereinheit 47, ein Ansteuermodul 48 und ein Schaltmodul 49, die entsprechend dem anhand Fig. 1 erläuterten Ausführungsbeispiel verschaltet sind, zwei Ansteuersendesignale mit unterschiedlicher erster und zweiter Grundfrequenz erzeugbar sind. Die Ansteuersignale sind über jeweils eine erste Sendeleitung 50 und eine zweite Sendeleitung 51 jeweils einem ersten Sendekopf 52 und einem zweiten Sendekopf 53 mit an die jeweilige Grundfrequenz angepaßter Sendecharakteristik einspeisbar. In der Darstellung gemäß Fig. 2 sind die Sendeköpfe 52, 53 an das erste Klebstück 11 des Prüfkörpers 12 angekoppelt.

Bei Zwei- oder auch Mehrfrequenzeinschallung ist aus geometrischen Gründen im allgemeinen Schrägeinschallung erforderlich. Zur Bestimmung der Zughaftfestigkeit werden die Verschiebungskomponenten rechtwinklig zu den Grenzflächenbereich und zur Bestimmung der Scherhaftfestigkeit die Verschiebungskomponenten parallel zu dem Grenzflächenbereich von mit den Sendeköpfen 52, 53 bei dem Ausführungsbeispiel gemäß Fig. 2 eingeschallten Longitudinalwellen und Transversalwellen ausgewertet.

Die in Fig. 2 dargestellte Vorrichtung weist eine Empfangseinheit 54 auf, die über einen ersten Empfangskopf 55, einen zweiten Empfangskopf 56 und einen dritten Empfangskopf 57 verfügt. Der erste Empfangskopf 55 ist so in bezug auf den ihm zugeordneten ersten Sendekopf 52 ausgerichtet und mit einer Bandbreite versehen, daß ein erstes Empfangssignal mit der ersten Grundfrequenz sowie der zugeordneten zweiten Harmonischen mit der doppelten Frequenz der ersten Grundfrequenz detektierbar ist. Weiterhin weist der erste Empfangskopf 55 einen Frequenzgang auf, bei dem die Frequenzkomponente der zweiten Harmonischen der ersten Grundfrequenz mit einem gegenüber einer frequenzunabhängigen gleichmäßigen Charakteristik doppelten Intensität detektierbar ist.

Der zweite Empfangskopf 56 ist in entsprechender Weise in bezug auf den ihm zugeordneten zweiten Sendekopf 53 ausgerichtet und verfügt über einen Frequenzgang, der die Detektion der zweiten Grundfrequenz sowie die zweite Harmonische der zweiten Grundfrequenz mit doppelter Intensität gestattet.

Der dritte Empfangskopf 57 schließlich ist in bezug auf die Sendeköpfe 52, 53 so ausgerichtet und mit einer Bandbreite versehen, daß ein aufgrund nichtlinearer Wechselwirkungen in dem durch die Sendesignale der Sendeköpfe 52, 53 beaufschlagten Grenzflächenbereich 14 erzeugtes Empfangssignal mit einer der Summenfrequenz aus der ersten Grundfrequenz und der zweiten Grundfrequenz entsprechenden Frequenzkomponente detektierbar ist. Dabei weist der dritte Empfangskopf 57 einen Frequenzgang auf, der im Bereich einer aus der ersten Grundfrequenz und der zweiten Grundfrequenz additiv gebildeten Summenfrequenz eine Empfindlichkeit aufweist, die den Empfindlichkeiten des ersten Empfangskopfes 55 sowie des zweiten Empfangskopfes 56 bei der ersten Grundfrequenz beziehungsweise der zweiten Grundfrequenz entspricht.

Die Empfangssignale des ersten Empfangskopfes 55, des zweiten Empfangskopfes 56 und des dritten Empfangskopfes 57 sind über jeweils eine zugeordnete erste Empfangsleitung 58, eine zweite Empfangsfeitung 59 sowie eine dritte Empfangsleitung 60 einem ersten Frequenzanalysator 61, einem zweiten Frequenzanalysator 62 sowie einem dritten Frequenzanalysator 63 der Empfangseinheit 54 einspeisbar.

Die Vorrichtung gemäß Fig. 2 verfügt über eine Auswerteeinheit 64, die ein erstes Grundfrequenzfilter 65 und ein erstes Obertonfilter 66 aufweist, die jeweils als Bandpaßfilter ausgestaltet und über die Frequenzkomponentenleitung 21 an den ersten Frequenzanalysator 61 angeschlossen sind. Mit dem ersten Grundfrequenzfilter 65 ist aus dem Ausgangssignal des ersten Frequenzanalysators 61 die Frequenzamplitude bei der ersten Grundfrequenz herausfilterbar. Mit dem ersten Obertonfilter 66 ist die Frequenzkomponente der zweiten Harmonischen mit dem doppelten Wert der ersten Grundfrequenz herausfilterbar.

Weiterhin verfügt die Auswerteeinheit 64 über ein zweites Grundfrequenzfilter 67 und ein zweites Obertonfilter 68, die über eine Frequenzkomponentenleitung 21 an den zweiten Frequenzanalysator 62 angeschlossen und ebenfalls als aussteuerbare Bandpaßfilter ausgelegt sind. Aus dem Ausgangssignal des zweiten Frequenzanalysators 62 sind mit dem zweiten Grundfrequenzfilter 67 die der zweiten Grundfrequenz entsprechende Frequenzkomponente und mit dem zweiten Obertonfilter 68 die der zweiten Harmonischen mit doppelter zweiter Grundfrequenz entsprechende Frequenzkomponente herausfilterbar. Die Ausgangssignale der Grundfrequenzfilter 65, 67 sind dem Summierglied 29 der Auswerteeinheit 64 unmittelbar und die Ausgangssignale der Obertonfilter 66, 68 nach Vorzeichenumkehr durch Invertierelemente 30 über jeweils Monofrequenzleitungen 28 dem Summierglied 29 einspeisbar.

Schließlich ist die Auswerteeinheit 64 mit einem über eine Frequenzkomponentenleitung 21 an den dritten Frequenzanalysator 63 angeschlossenes Summenfrequenzfilter 69 versehen, mit der eine Frequenzkomponente im Bereich eines aus der ersten Grundfrequenz und der zweiten Grundfrequenz additiv gebildeten Summenfrequenzwertes herausfilterbar ist. Das Ausgangssignal des Summenfrequenzfilters 69 ist nach Vorzeichenumkehr durch ein Invertierelement 30 sowie Verdoppelung durch ein Verdoppelelement 31 über eine Monofrequenzleitung 28 dem Summierglied 29 einspeisbar.

Mit dem Summierglied 29 sind die teilweise durch den Frequenzgang der Empfangsköpfe 55, 56, 57 und teilweise durch das Verdoppelelement 31 sowie die Invertierelemente 30 gewichteten Frequenzamplituden zu Meßwerten additiv verknüpfbar, die über die Summensignalleitung 32 zur Weiterverarbeitung entsprechend dem anhand Fig. 1 erläuterten Ausführungsbeispiel in den Meßwertespeicher 33 einspeisbar sind. Bei dem anhand Fig. 2 erläuterten Ausführungsbeispiel ist es zweckmäßig, daß die einzelnen erfaßten Frequenzkomponenten überlappungsfrei sind, so daß eine Überlagerung von durch unterschiedliche physikalische Prozesse hervorgerufenen Empfangssignalen im Frequenzbereich weitestgehend ausgeschlossen ist.

Durch das Einschallen wenigstens zweier Grundfrequenzen in den Prüfkörper 12 sowie Detektion von Frequenzkomponenten bei den Grundfrequenzen, den zugehörigen zweiten Harmonischen sowie der Summenfrequenz aus den Grundfrequenzen entsprechenden Frequenzwerten ist eine Erhöhung der Meßgenauigkeit und Aussagekraft sichergestellt.

Eine weitere Verbesserung ist beispielsweise dadurch geschaffen, daß entsprechend dem anhand Fig. 2 erläuterten Ausführungsbeispiel höhere Harmonische sowohl der Grundfrequenzen als auch der Summenfrequenzen detektiert und zur Bildung des Meßwertes herangezogen werden.

Bei einem weiteren Ausführungsbeispiel einer Vorrichtung zum Untersuchen von Grenzflächenbereichen 14 mit Ultraschall ist vorgesehen, eine Anordnung von Sendeköpfen zu verwenden, mit denen sowohl Longitudinalwellen als auch Transversalwellen erzeugbar sind.

## Patentansprüche

1. Vorrichtung zum Untersuchen von Grenzflächenbereichen mit Ultraschall mit wenigstens einer Sendeeinheit (5), mit der Sendesignale einstellbarer Amplitude bei wenigstens einer Grundfrequenz erzeugbar sind, mit einer Empfangseinheit (17), mit der die wenigstens eine Grundfrequenz sowie wenigstens die zugehörige niedrigste der höheren Harmonischen der wenigstens einen Grundfrequenz der Sendesignale in ihren Frequenzamplituden als Empfangssignale detektierbar sind, und mit einer ein Summierglied (29) aufweisenden Auswerteeinheit (27), in der die Frequenzamplituden der Empfangssignale zu einem Meßwert verknüpfbar sind, der als eine erste Komponente die einfache Frequenzamplitude einer Grundfrequenz und als wenigstens eine weitere Komponente die Frequenzamplitude einer der Grundfrequenz zugeordneten höheren Harmonischen umfaßt, **dadurch gekennzeichnet, daß** eine Filteranordnung (22, 23, 24, 25, 26) vorgesehen ist, mit der allein die oder jede Grundfrequenz sowie wenigstens eine einer Grundfrequenz zugeordnete Frequenzamplitude einer niedrigsten der höheren Harmonischen unter Unterdrückung eines Gleichspannungsanteiles erfaßbar sind und daß der Meßwert als wenigstens eine weitere Komponente den doppelten negativen Wert der Amplitude einer der oder jeder Grundfrequenz zugeordneten niedrigsten der höheren Harmonischen aufweist.

2. Vorrichtung nach Anspruch 1, **dadurch gekennzeichnet, daß** der Meßwert weiterhin die einfache Frequenzamplitude der zugehörigen nächsthöheren dritten Harmonischen mit dreifacher Grundfrequenz aufweist.

3. Vorrichtung nach Anspruch 1 oder Anspruch 2, **dadurch gekennzeichnet, daß** der Meßwert weiterhin die einfache Frequenzamplitude der zugehörigen fünften Harmonischen mit fünffacher Grundfrequenz aufweist.

4. Vorrichtung nach einem der Ansprüche 1 bis 3, **dadurch gekennzeichnet, daß** der Meßwert weiterhin den doppelten negativen Wert der Frequenzamplitude der sechsten Harmonischen mit sechsfacher Grundfrequenz aufweist.

5. Vorrichtung nach einem der Ansprüche 1 bis 4, **dadurch gekennzeichnet, daß** die Sendesignale wenigstens zwei Grundfrequenzen aufweisen.

6. Vorrichtung nach Anspruch 5, **dadurch gekennzeichnet, daß** der Meßwert die einfache Frequenzamplitude bei der Summenfrequenz der wenigstens zwei Grundfrequenzen aufweist.

7. Vorrichtung nach Anspruch 5 oder Anspruch 6, **dadurch gekennzeichnet, daß** der Meßwert Frequenzamplituden bei Summenfrequenzen und/oder Differenzfrequenzen aus den Grundfrequenzen, höheren Harmonischen sowie Kombinationen daraus aufweist.

8. Vorrichtung nach einem der Ansprüche 1 bis 7, **dadurch gekennzeichnet, daß** die Verdoppelung des Wertes einer Frequenzamplitude durch einen verdoppelnden Signalwandler (31) durchführbar ist.

9. Vorrichtung nach einem der Ansprüche 1 bis 7, **dadurch gekennzeichnet, daß** der Frequenzgang der Empfangseinheit (17, 54) so eingerichtet ist, daß wenigstens eine entsprechende Frequenzamplitude in ihrer Intensität verdoppelt ist.

10. Vorrichtung nach einem der Ansprüche 1 bis 9, **dadurch gekennzeichnet, daß** mit der Sendeeinheit (5, 46) Longitudinalwellen erzeugbar sind.

11. Vorrichtung nach einem der Ansprüche 1 bis 9, **dadurch gekennzeichnet, daß** mit der Sendeeinheit (5, 46) Transversalwellen erzeugbar sind.

12. Vorrichtung nach einem der Ansprüche 1 bis 9, **dadurch gekennzeichnet, daß** mit der Sendeeinheit (5, 46) Longitudinalwellen und Transversalwellen erzeugbar sind.

13. Vorrichtung nach einem Ansprüche 1 bis 12, **dadurch gekennzeichnet, daß** die Auswerteeinheit (27, 64) über einen Kalibrierwertespeicher (43) verfügt, mit dem die Meßwerte mit experimentell gewonnenen Kalibrierwerten als absolute Kraftwerte in untersuchten Grenzflächenbereichen (14) umrechenbar sind.

14. Vorrichtung nach einem der Ansprüche 1 bis 13, **dadurch gekennzeichnet, daß** die Auswerteeinheit (27, 64) einen Parameterspeicher (45) aufweist, in dem Parameter abgespeichert sind, mittels denen in Verbindung mit den Meßwerten in einem Rechenalgorithmus absolute Kraftwerte in untersuchten Grenzflächenbereichen (14) berechenbar sind.

## Claims

1. Device for investigating boundary regions with ultrasound, having at least one transmitter unit (5) with which transmission signals of variable amplitude may be generated at least at one basic frequency, having a receiver unit (17) with which the at least one basic frequency and at least the associated lowest of the higher harmonics of the at least one basic frequency of the transmission signals are detectable in their frequency amplitudes as received signals and with an evaluation unit (27) having a summing element (29) in which the frequency amplitudes of the received signals may be combined into one measured value which as a first component includes the single frequency amplitude of a basic frequency and as at least one further component the frequency amplitude of a higher harmonic associated with the basic frequency, **characterised in that** a filter arrangement (22, 23, 24, 25, 26) is provided with which the only or each basic frequency and at least one frequency amplitude of a lowest of the higher harmonics associated with a basic frequency may be detected while suppressing a direct current portion, and that the measured value has, as at least one further component, double the negative value of the amplitude of a lowest of the higher harmonics associated with one or each basic frequency.

2. Device according to Claim 1, **characterised in that** the measured value also has the single frequency amplitude of the associated next higher third harmonic at three times the basic frequency.

3. Device according to Claim 1 or Claim 2, **characterised in that** the measured value also has the single frequency amplitude of the associated fifth harmonic at five times the basic frequency.

4. Device according to one of the claims 1 to 3, **characterised in that** the measured value also has double the negative value of the frequency amplitude of the sixth harmonic at six times the basic frequency.

5. Device according to one of the claims 1 to 4, **characterised in that** the transmission signals have at least two basic frequencies.

6. Device according to Claim 5, **characterised in that** the measured value has the single frequency amplitude at the sum frequency of the at least two basic frequencies.

7. Device according to Claim 5 or Claim 6, **characterised in that** the measured value has frequency amplitudes at sum frequencies and/or difference frequencies of the basic frequencies, the higher harmonics and combinations thereof.

8. Device according to one of the claims 1 to 7, **characterised in that** the doubling of the value of a frequency amplitude may be performed by a doubling signal transformer (31).

9. Device according to one of the claims 1 to 7, **characterised in that** the frequency response of the receiver unit (17, 54) is so adjusted that at least one relevant frequency amplitude is doubled in its intensity.

10. Device according to one of the claims 1 to 9, **characterised in that** longitudinal waves may be generated with the transmitter unit (5, 46).

11. Device according to one of the claims 1 to 9, **characterised in that** transverse waves may be generated with the transmitter unit (5, 46).

12. Device according to one of the claims 1 to 9, **characterised in that** longitudinal and transverse waves may be generated with the transmitter unit (5, 46).

13. Device according to one of the claims 1 to 12, **characterised in that** the evaluation unit (27, 64) has a calibration value store (43) with which the measured values may be converted, using experimentally found calibration values, as absolute force values in the boundary regions (14) under investigation.

14. Device according to one of the claims 1 to 13, **characterised in that** the evaluation unit (27, 64) has a parameter store (45) in which parameters are stored by means of which, in combination with the measured values, absolute force values in the boundary regions (14) under investigation may be calculated in a calculation algorithm.

## Revendications

1. Dispositif d'examen de zones de surfaces limites au moyen d'ultrasons, comportant au moins une unité émettrice (5), au moyen de laquelle des signaux d'émission d'amplitude réglable peuvent être produits à au moins une fréquence de base, comportant une unité réceptrice (17) au moyen de laquelle la ou les fréquences de base ainsi qu'au moins la plus basse des harmoniques supérieures correspondantes de la ou des fréquences de base des signaux d'émission peuvent être détectées dans leurs amplitudes de fréquence en tant que signaux de réception, et comportant une unité d'exploitation (27) qui comporte un élément d'addition (29) et dans laquelle les amplitudes de la fréquence des signaux de réception peuvent être combinées en une valeur de mesure qui comprend, en tant que première composante, l'amplitude de fréquence simple d'une fréquence de base, et en tant qu'au moins une autre composante, l'amplitude de fréquence d'une harmonique supérieure associée à la fréquence de base, **caractérisé en ce qu'**il est prévu un dispositif de filtrage (22, 23, 24, 25, 26) au moyen duquel seule la fréquence de base ou chaque fréquence de base ainsi qu'au moins une amplitude de fréquence associée à une fréquence de base de la plus basse des harmoniques supérieures, peuvent être détectées par suppression d'une composante de tension continue, et **en ce que** la valeur de mesure en tant qu'au moins une autre composante, comporte le double de la valeur négative de l'amplitude d'une plus basse des harmoniques supérieures associées à la ou à chaque fréquence de base.

2. Dispositif selon la revendication 1, **caractérisé en ce que** la valeur de mesure comprend en outre l'amplitude de fréquence simple de la troisième harmonique supérieure suivante correspondante avec fréquence de base triple.

3. Dispositif selon la revendication 1 ou 2, **caractérisé en ce que** la valeur de mesure comprend en outre l'amplitude de fréquence simple de la cinquième harmonique correspondante avec fréquence de base quintuple.

4. Dispositif selon l'une des revendications 1 à 3, **caractérisé en ce que** la valeur de mesure comprend en outre le double de la valeur négative de l'amplitude de fréquence de la sixième harmonique avec fréquence de base sextuple.

5. Dispositif selon l'une des revendications 1 à 4, **caractérisé en ce que** les signaux d'émission comportent au moins deux fréquences de base.

6. Dispositif selon la revendication 5, **caractérisé en ce que** la valeur de mesure comprend l'amplitude de fréquence simple pour la fréquence totale des au moins deux fréquences de base.

7. Dispositif selon la revendication 5 ou la revendication 6, **caractérisé en ce que** la valeur de mesure comprend des amplitudes de fréquence pour des fréquences totales et/ou des fréquences différentielles parmi les fréquences de base, des harmoniques supérieures ainsi que des combinaisons de celles-ci.

8. Dispositif selon l'une des revendications 1 à 7, **caractérisé en ce que** le doublement de la valeur d'une amplitude de fréquence peut être exécuté au moyen d'un convertisseur de signaux (31) de doublage.

9. Dispositif selon l'une des revendications 1 à 7, **caractérisé en ce que** la réponse en fréquences de l'unité réceptrice (17, 54) est conçue de manière qu'au moins une amplitude de fréquence correspondante soit doublée dans son intensité.

10. Dispositif selon l'une des revendications 1 à 9, **caractérisé en ce qu'**avec l'unité d'émission (5, 46) on peut produire des ondes longitudinales.

11. Dispositif selon l'une des revendications 1 à 9, **caractérisé en ce qu'**avec l'unité émettrice (5, 46), on peut produire des ondes transversales.

12. Dispositif selon l'une des revendications 1 à 9, **caractérisé en ce qu'**avec l'unité émettrice (5, 46) on peut produire des ondes longitudinales et des ondes transversales.

13. Dispositif selon l'une des revendications 1 à 12, **caractérisé en ce que** l'unité d'exploitation (27, 64) comporte une mémoire de valeurs d'étalonnage (43) au moyen de laquelle les valeurs de mesure peuvent être reconverties avec des valeurs d'étalonnage obtenues de manière expérimentale, en tant que valeurs absolues des forces dans des zones de surfaces limites (14) examinées.

14. Dispositif selon l'une des revendications 1 à 13, **caractérisé en ce que** l'unité d'exploitation (27, 64) comporte une mémoire de paramètres (45) dans laquelle sont mémorisés des paramètres au moyen desquels on peut calculer, en combinaison avec les valeurs de mesure dans un algorithme de calcul, des valeurs absolues des forces dans des zones de surfaces limites (14) examinées.
